# EUROPEAN PATENT SPECIFICATION

(11) **EP 3 599 378 B1**
(45) Date of publication and mention of the grant of the patent: **19.05.2021**
(21) Application number: 19188134.1
(22) Date of filing: 24.07.2019
(51) Int. Cl.: F04B 39/00, F04B 39/12, F04B 39/02

(54) **FLUID-CONDUCTING PIPE**
FLUIDFÜHRENDES ROHR
CONDUITE POUR TRANSPORT DE FLUIDE

(30) Priority: 27.07.2018 BR 102018015458
(43) Date of publication of application: 29.01.2020
(73) Proprietor: Whirlpool S.A., 04578-000 São Paulo - SP (BR)
(72) Inventor: DOI, Ricardo Mikio, 89219-521 Joinville (BR); KREMER, Rodrigo, 89219-521 Joinville (BR)
(74) Representative: Modiano, Gabriella Diana

(56) References cited:
- WO-A1-97/31188
- WO-A1-2005/106250
- FR-A1- 2 571 814
- US-A1- 2002 009 370
- US-A1- 2002 127 123
- US-A1- 2006 093 497

## Description

### Field of the Invention

The present invention refers to a fluid-conducting pipe of a reciprocating compressor discharge system. Said pipe is configured so as to reduce the noise generated in high angular speed reciprocating compressors.

### Background of the Invention

As is well known in the state of the art, reciprocating compressors of refrigeration apparatus comprise refrigerant discharge systems, which usually include acoustic filters consisting of expansion chambers and interconnecting pipes, in addition to an outlet piping of the compressor.

It is also well known that reciprocating compressors operate at different angular speeds, depending on the volume of the compartment to be cooled, and the required cooling temperature, for example.

For reciprocating compressors operating at high angular speed, the operating frequency of the compressor itself may coincide with the natural frequency of its discharge piping. This coincidence, or resonance, causes amplification of the vibrational energy in the discharge piping, generating high noise level in the compressor and/or breakage of the pipe by fatigue.

In order to mitigate the generated noise, several solutions have been proposed in the state of the art. In some solutions, the maximum angular speed of the compressor is limited to values around 4500 rpm, which is equivalent to an operating frequency of 75 Hz, to avoid coincidence between the operating frequency and the first natural frequency of the discharge piping, which is around 85 Hz. However, some embodiments require higher angular speeds of operation of the reciprocating compressor.

Alternatively, other solutions of the state of the art propose that the natural frequencies of the discharge piping and the surroundings of such frequencies be avoided, particularly with the use of angular speed control via electronic logic. However, this solution option penalizes the performance of the compressor, since it limits the angular speeds of operation.

Furthermore, as an additional alternative, there is proposed in the state of the art the increase of the natural frequencies of the discharge piping, which implies in increasing the dynamic stiffness of the piping. Indirectly, this increases the vibration at low frequencies.

Alternative solution is proposed by document WO 2005/106250 A1 AT010136U1, which discloses a discharge piping made of polymeric material and apparently in a predefined shape. However, the noise reduction produced by the discharge piping of polymeric material is not sufficient as an attenuator for situations of reciprocating compressors operating at higher rotation regimes.

A fluid conducting pipe having the features in the preamble of attached claim 1 is known e.g. from document FR2571814.

It is based on this scenario that the present invention arises.

### Objectives of the Invention

Therefore, the present invention is basically aimed at solving the problem of noise and the breakage of the pipe deriving from the resonance of the discharge piping in reciprocating compressors operating at high angular speed regimes.

It is also another object of the present invention to provide a reciprocating compressor discharge system that is economically feasible, and technically efficient in reducing the generated noise.

### Summary of the Invention

All objects of the present invention are achieved by means of a fluid-conducting pipe of a reciprocating compressor, made of polymeric material, and further comprising at least one vibrational energy dissipation element.

In an aspect of the invention said vibrational energy dissipation element is a spring and has geometry of a spiral with constant spire diameter and periodic segments of uniform or variable lengths with each segment section being misaligned relative to each other.

In another preferred embodiment, said fluid-conducting pipe has the function of a discharge pipe of said reciprocating compressor.

In another preferred embodiment, said fluid-conducting pipe is made of polymeric material without thermoforming.

In another preferred embodiment, said polymeric material is selected from: Perfluoroalkoxy Alkane (PFA) and Fluorinated Ethylene and Propylene (FEP).

In another preferred embodiment, said fluid-conducting pipe is applicable to a reciprocating compressor which comprises at least one expansion chamber.

### Brief Description of the Drawings

The preferred embodiment of the present invention is described in detail based on the listed figures, which have a merely exemplifying and nonlimiting character, since adaptations and modifications may be made without thereby departing from the scope of the claimed protection.
Figure 1 refers to a graph that demonstrates the increase of noise in reciprocating compressors at angular speeds above 4,500 rpm.

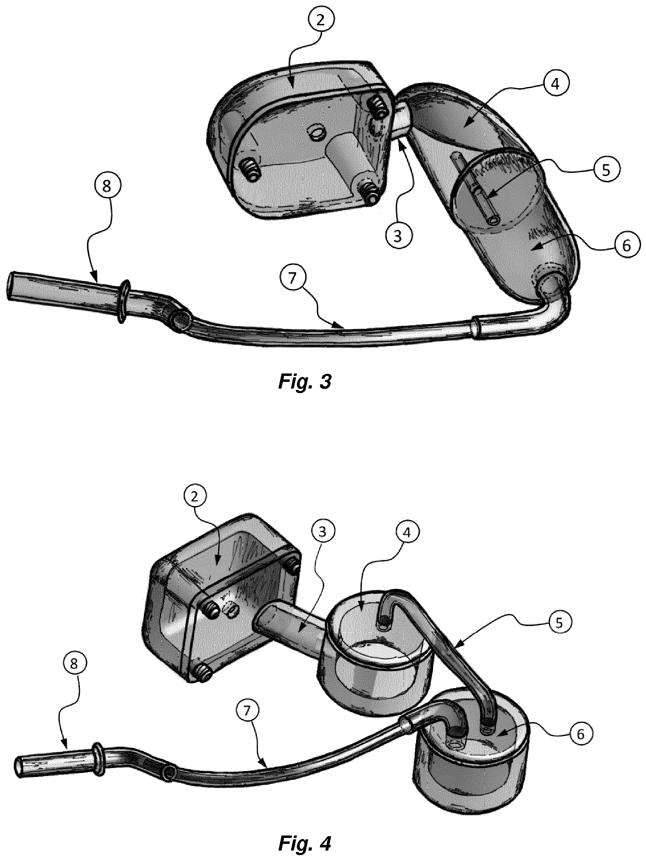

Figures 2 to 4 refer to a schematic view of the discharge system of a reciprocating compressor comprising the fluid-conducting pipe of the present invention with two expansion chambers.
Figure 5 refers to a construction of a fluid-conducting pipe provided with a vibrational energy dissipation element outside the scope of the present invention.
Figure 6 refers to an embodiment of the fluid-conducting pipe provided with a vibrational energy dissipation element according to the present invention.
Figure 7 refers to another construction of a fluid-conducting pipe provided with a vibrational energy dissipation element outside the scope of the present invention.

### Detailed Description of the Invention

As shown in the figures, the present invention refers to a fluid-conducting pipe provided with a specific construction, which allows to solve the problem of noise and/or breakage of the pipe deriving from the resonance of the discharge piping in reciprocating compressors operating at high angular speed regimes (above 4,500 rpm), economically feasible, and technically efficient.

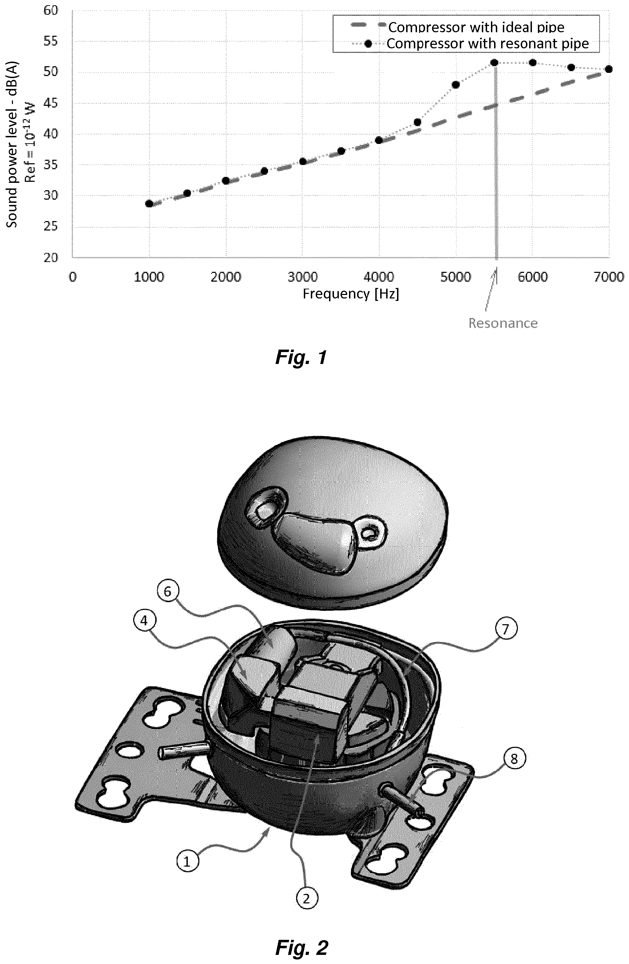

As shown in Figure 1, the peak of noise level generated by reciprocating compressors is characterized precisely at rotations above 4,500 rpm, so that constructions directed for this problem are highly necessary.

Thus, the fluid-conducting pipe of the present invention is preferably applicable to a discharge system of a reciprocating compressor (1) comprising a first piping portion (3), a first expansion chamber (4), a second piping portion (5), and a second expansion chamber (6). Said first piping portion (3) connects a discharge chamber (2) of the compressor (1) to the first expansion chamber 4. The second piping portion (5) connects the first expansion chamber (4) to the second expansion chamber (6). The discharge pipe (7) of the compressor connects the second expansion chamber (6) to an outlet pipe (8) of the compressor (1).

Preferably, the discharge system comprises two expansion chambers. Alternatively, the system may comprise only one expansion chamber or more than two expansion chambers.

The discharge chamber of the compressor (1), although contributing to the attenuation of dynamic pressures (pulsations), it plays a key role in the energy efficiency performance of the compressor. The piping portions and the expansion chambers are sized to attenuate the dynamic pressures deriving from the pumping of refrigerant gas in the compressor. The structure of these components can be rigid or flexible as long as it meets the requirements of mechanical strength. The discharge pipe and the outlet pipe of the compressor are sequentially connected in the last expansion chamber, and they have the function of conducting the compressed refrigerant gas out of the compressor.

The structure of such pipes is preferentially and relatively flexible to impart little vibrational energy from the inner mechanical assembly to the casing during the refrigerant gas compression process.

According to the present invention, the fluid-conducting pipe preferably acts as a discharge pipe (7), made of polymeric material. The piping made of polymeric material has lower stiffness and density, which implies a lower capacity to amplify the vibrational mechanical energy generated by the gas compression process at high angular speed of the compressor (1).

In addition, polymeric materials have higher damping compared to metallic materials traditionally used in the state of the art.

Preferably, the discharge pipe (7) made of polymeric material does not present thermoforming.

The pipe may be composed of polymeric materials, preferably Perfluoroalkoxy Alkane (PFA) and Fluorinated Ethylene and Propylene (FEP).

Furthermore, according to the present invention, the discharge pipe (7) made of polymeric material comprises at least one vibrational energy dissipation element (9) disposed on its outer surface.

This is necessary because the noise reduction produced by the discharge pipe in polymeric material is not sufficient as an attenuator for situations of reciprocating compressors operating at higher rotation regimes.

The use of the vibrational energy dissipation element (9) generates friction during vibration of the discharge pipe. This friction dissipation effect is potentiated when the radial clearances between the pipe and the spring exist and are not large. When these clearances do not exist, the dissipation is minimized; on the other hand, when the radial clearances are very large, an effect of mechanical beats is generated, which may generate unwanted noise.

Preferably, said vibrational energy dissipation element (9) is a spring arranged around said discharge pipe (7) made of polymeric material, which is more susceptible to shape variation caused by various effects, such as, alteration of the mechanical properties arising from the high temperature and aging of the polymeric material and pipe manufacturing tolerances. Therefore, the use of the polymeric pipe with the spring can generate the drawback of the greater variability of the radial clearances compared to the metallic pipes with springs.

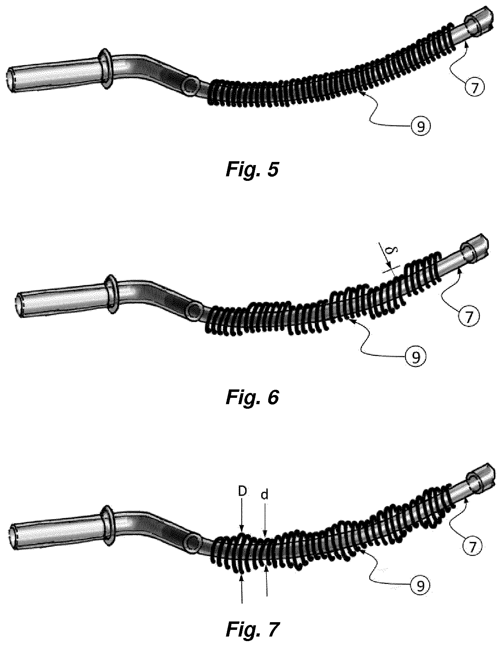

In the context of such problems of radial clearances such a spring assumes irregularly arranged spires, as shown in Figures 6 and 7, and it may also have regularly arranged spires, as shown in Figure 5.

In the construction of Figure 5, outside the scope of the present invention, said dissipation element has a spiral geometry with constant spire diameter along its entire length. The constituent material of this element is preferably metallic, and it may alternatively be of polymeric material.

The possibility of irregular arrangement of the spires enables the radial clearances between the spring and the pipe to be adaptively controlled, since these clearances are influential in the dissipation of the vibrational energy.

According to the invention, in the construction of Figures 6, the vibrational energy dissipation element has a spiral geometry with constant spire diameter; however, the periodic segments of uniform or variable lengths have each segment section misaligned relative to each other along its length.

In the construction of Figure 7, outside the scope of the present invention, the spire diameters are variable along each segment, which may have uniform or non-uniform lengths. At the end of each segment, there are few spires with smaller diameters with the function of keeping the entire structure of the spring fixed in the pipe, while the other spires have larger spire diameter and may exhibit movement relative to the pipe to generate friction.

Accordingly, the construction proposed in the present invention is capable of reducing noises generated by reciprocating compressors operating at a high angular speed regime, more efficiently than the solutions described in the state of the art.

It is important to emphasize that the above description has the sole purpose of describing, in an exemplary manner, the particular embodiment of the present invention. Therefore, it is clear that modifications, variations and constructive combinations of the elements performing the same function substantially in the same manner to achieve the same results, remain within the scope of protection defined by the appended claims.

## Claims

1. Fluid-conducting pipe for a reciprocating compressor (1), wherein such fluid-conducting pipe is made of polymeric material, and further comprises at least one vibrational energy dissipation element (9), **characterized by** the fact that said at least one vibrational energy dissipation element (9) is a spring having spiral geometry with constant spire diameter and periodic segments of uniform or variable lengths with each segment being misaligned relative to each other.

2. Fluid-conducting pipe according to claim 1, **characterized by** the fact that said fluid-conducting pipe has the function of a discharge pipe (7) of said reciprocating compressor (1).

3. Fluid-conducting pipe according to claim 1 or 2, **characterized by** the fact that said fluid-conducting pipe is made of polymeric material without thermoforming.

4. Fluid-conducting pipe according to any one of claims 1 to 3, **characterized by** the fact that the polymeric material is selected from: Perfluoroalkoxy Alkane (PFA) and Fluorinated Ethylene and Propylene (FEP).

5. Fluid-conducting pipe according to any one of claims 1 to 4, **characterized by** the fact that said fluid-conducting pipe is applicable to a reciprocating compressor (1) which comprises at least one expansion chamber.

## Patentansprüche

1. Fluidführendes Rohr für einen Kolbenkompressor (1), wobei das fluidführende Rohr aus Polymermaterial besteht und weiter mindestens ein Schwingungsenergiedissipationselement (9) umfasst, **dadurch gekennzeichnet, dass** das mindestens eine Schwingungsenergiedissipationselement (9) eine Feder ist, die eine Spiralgeometrie mit konstantem Windungsdurchmesser und periodischen Segmenten von einheitlicher oder variabler Länge hat, wobei alle Segmente zueinander versetzt sind.

2. Fluidführendes Rohr gemäß Anspruch 1, **dadurch gekennzeichnet, dass** das fluidführende Rohr die Funktion eines Ablassrohrs (7) des Kolbenkompressors (1) hat.

3. Fluidführendes Rohr gemäß Anspruch 1 oder 2, **dadurch gekennzeichnet, dass** das fluidführende Rohr ohne Thermoformen aus Polymermaterial hergestellt wird.

4. Fluidführendes Rohr gemäß einem beliebigen der Ansprüche 1 bis 3, **dadurch gekennzeichnet, dass** das Polymermaterial gewählt ist aus Perfluoralkoxyalkan (PFA) und fluoriertem Ethylen und Propylen (FEP).

5. Fluidführendes Rohr gemäß einem beliebigen der Ansprüche 1 bis 4, **dadurch gekennzeichnet, dass** das fluidführende Rohr an einem Kolbenkompressor (1) anwendbar ist, der mindestens eine Expansionskammer umfasst.

## Revendications

1. Tuyau de transport de fluide pour compresseur volumétrique alternatif (1), dans lequel le tuyau de transport de fluide est fait d'un matériau polymère, et comprend en outre au moins un élément de dissipation d'énergie de vibration (9), **caractérisé par le fait que** ledit au moins un élément de dissipation d'énergie de vibration (9) est un ressort ayant une géométrie en spirale avec un diamètre de spire constant et des segments périodiques de longueur uniforme ou variable, les segments étant hors d'alignement les uns par rapport aux autres.

2. Tuyau de transport de fluide selon la revendication 1, **caractérisé par le fait que** ledit tuyau de transport de fluide a la fonction d'une conduite de refoulement (7) dudit compresseur volumétrique alternatif (1).

3. Tuyau de transport de fluide selon la revendication 1 ou 2, **caractérisé par le fait que** ledit tuyau de transport de fluide est fabriqué à partir d'un matériau polymère sans thermoformage.

4. Tuyau de transport de fluide selon l'une quelconque des revendications 1 à 3, **caractérisé par le fait que** le matériau polymère est choisi parmi l'alcane alcoxyle perfluoré (PFA) et l'éthylène-propylène fluoré (FEP).

5. Tuyau de transport de fluide selon l'une quelconque des revendications 1 à 4, **caractérisé par le fait que** ledit tuyau de transport de fluide est applicable à un compresseur volumétrique alternatif (1) qui comprend au moins une chambre de détente.
